(19) **Europäisches Patentamt**
**European Patent Office**
**Office européen des brevets**

(11) **EP 1 618 349 B1**

(12) **EUROPÄISCHE PATENTSCHRIFT**

(45) Veröffentlichungstag und Bekanntmachung des Hinweises auf die Patenterteilung:
**31.03.2010 Patentblatt 2010/13**

(51) Int Cl.:
***G01B 11/03*** (2006.01)

(21) Anmeldenummer: **04730247.6**

(22) Anmeldetag: **29.04.2004**

(86) Internationale Anmeldenummer:
**PCT/EP2004/004509**

(87) Internationale Veröffentlichungsnummer:
**WO 2004/097336 (11.11.2004 Gazette 2004/46)**

(54) **KOORDINATENMESSGERÄT**

CO-ORDINATE-MEASURING INSTRUMENT

APPAREIL DE MESURE DE COORDONNEES

(84) Benannte Vertragsstaaten:
**AT BE BG CH CY CZ DE DK EE ES FI FR GB GR HU IE IT LI LU MC NL PL PT RO SE SI SK TR**

(30) Priorität: **30.04.2003 DE 10319798**

(43) Veröffentlichungstag der Anmeldung:
**25.01.2006 Patentblatt 2006/04**

(73) Patentinhaber: **Werth Messtechnik GmbH**
**35394 Giessen (DE)**

(72) Erfinder: **CHRISTOPH, Ralf**
**35394 Giessen (DE)**

(74) Vertreter: **Stoffregen, Hans-Herbert**
**Patentanwalt**
**Postfach 21 44**
**63411 Hanau (DE)**

(56) Entgegenhaltungen:
**EP-A- 0 571 088          DE-A- 2 701 764**
**DE-A- 10 031 719          DE-U- 20 205 631**
**US-A1- 2001 017 674**

## Beschreibung

Die Erfindung bezieht sich auf ein Koordinatenmessgerät mit einer Durchlichtbeleuchtungsanordnung zum Messen eines Objektes, umfassend zumindest einen Beleuchtungskörper sowie eine entlang einer optischen Achse messende ein Objektiv umfassende Bildverarbeitungssensorik.

Um insbesondere großflächige Objekte mit einem Koordinatenmessgerät mit Bildverarbeitungssensorik zu messen, ist es zur Erzielung reproduzierbarer Messergebnisse hoher Genauigkeit erforderlich, dass große Flächen mit möglichst parallelem Licht ausgeleuchtet werden.

Hierzu besteht die Möglichkeit, dass bewegte Beleuchtungseinheiten mit der Kamera zusammen positioniert werden. Die hierfür erforderlichen Mechanikkomponenten sind jedoch teuer und reduzieren die dynamische Qualität des Gesamtmessgerätes durch die bewegten Massen.

Aus der DE-A- 27 01 764 ist ein Lichtflussregler für ein Mikroskop bekannt, der einen Träger mit einer Schar parallel zueinander verlaufender lichtdurchlässiger Kanäle auf weist. Der Träger ist um eine Achse drehbar, um im gewünschten Umfang Licht durch die Kanäle hindurchtreten zu lassen.

Eine Durchlichtbeleuchtung für ein Koordinatenmessgerät ist der DE-A- 198 05 040 zu entriehmen. Durch Anordnungen von Faserlichtleitern, Leuchtstoffröhren und/oder Leuchtdioden kann ein Messobjekt diffus oder gerichtet ausgeleuchtet werden.

Der DE-A-100 31 719 ist ein Koordinaten-Messgerät mit einer Beleuchtungseinrichtung zu entnehmen, die eine Homogenisierungsoptik in Form eines Mikrowabenkondensators umfasst.

Eine wasserdichte Beleuchtungsanordnung nach dem DE-U- 202 05 631, die für Fertigungseinrichtungen bestimmt ist, weist eine Vielzahl von Leuchtdioden auf, deren Strahlen durch eine bienenwabenförmige Lichtführung geleitet werden.

Der vorliegenden Erfindung liegt das Problem zu Grunde, ein Koordinatenmessgerät der eingangs genannten Art so weiterzubilden, dass mit hoher Genauigkeit Messungen durchgeführt werden können, ohne dass ein gemeinsames Positionieren und Bewegen von Beleuchtungskörper und Bildverarbeitungssensorik erforderlich ist.

Erfindungsgemäß wird das Problem dadurch gelöst, dass der zumindest eine Beleuchtungskörper diffus strahlend ausgebildet ist und dass zwischen dem Beleuchtungskörper und dem Objekt ein Filter mit kanalartigen Durchtrittsöffnungen angeordnet ist, die parallel zu der optischen Achse verlaufen und Strahlen kleiner einem definierten Grenzwinkel $\alpha$ zu der optischen Achse durchlassen und Strahlen, die zu der optischen Achse einen Winkel größer als $\alpha$ einschließen, nicht durchlassen.

Insbesondere zeichnet sich die Erfindung dadurch aus, dass die kanalartigen Durchtrittsöffnungen eine Apertur aufweisen, die gleich oder kleiner als optische Apertur des Objektivs ist. Dadurch werden Abbildungsfehler und damit Messfehler beim Koordinatenmessgerät, insbesondere beim Messen rotationssymmetrischer Teile, vermieden.

Der Grenzwinkel, unter dem durch die Durchtrittsöffnungen Strahlen hindurchtreten können, beläuft sich grundsätzlich auf weniger als 10°, vorzugsweise auf weniger als 3°, gegebenenfalls auf weniger als 1°.

Der Filter kann z. B. Durchtrittsöffnungen mit kreisförmigem, mehreckigem wie vier- oder sechseckigem Querschnitt, insbesondere quadratischem Querschnitt aufweisen, wobei die Durchtrittsöffnungen in Richtung der optischen Achse verlaufen. Dabei können die Durchtrittsöffnungen eine Zylinderform rechteckigen wie quadratischen oder kreisförmigen Querschnitts in einem Verhältnis von Länge H- zu Durchmesser bzw. Kante B aufweisen, das mindestens 4:1 bis 10:1 betragen sollte. Insbesondere beläuft sich das Längen- zu Durchmesser- bzw. Kantenverhältnis (Aspekt-Verhältnisbegrenzung) auf $2 \leq H : B \leq 50$.

Erfindungsgemäß wird durch Anordnen eines Filters zwischen dem Objekt und der Beleuchtungsanordnung die Beleuchtungsapertur gezielt reduziert, um die Beleuchtungsstrahlen, die zwischen optischer Achse einen Winkel kleiner als ein mechanisch definierter Grenzwinkel beschreiben, zur Beleuchtung des zu messenden Objektes zu nutzen. Eine schärfere Abbildung insbesondere bei der Messung von rotationssymmetrischen Teilen wird hierdurch möglich.

Erfindungsgemäß wird scheinbar eine Punktlichtquelle für jeden Ort der Beleuchtungsfläche erzeugt. Dabei kann als Beleuchtungskörper ein Flächenstrahler z. B. in Form einer Glasplatte benutzt werden, in die seitlich Licht eingekoppelt wird. Hierzu kann z. B. eine Leuchtstoffröhre verwendet werden.

Durch die erfindungsgemäße Lehre wird Falschlicht vermieden, das in die Optik, d. h. die Bildverarbeitungssensorik ansonsten gelangen könnte. Dadurch werden Abbildungsfehler und damit Messfehler beim Koordinatenmessgerät, insbesondere beim Messen rotationssymmetrischer Teile, vermieden.

Somit können mit einer statischen Beleuchtungsanordnung große Flächen gemessen werden, die quasi mit parallelen bzw. Strahlen ausgeleuchtet werden, die zur optischen Achse der Bildverarbeitungssensorik mit Kamera wie CCD-Kamera einen sehr kleinen Winkel beschreiben.

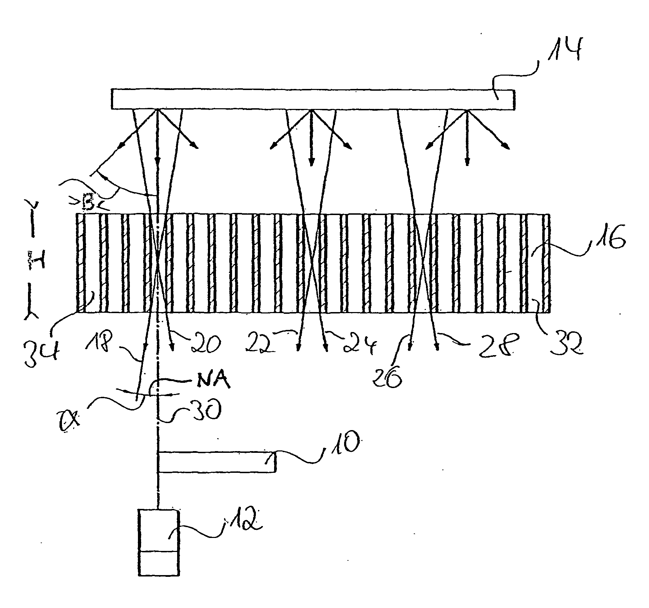

Weitere Einzelheiten, Vorteile und Merkmale der Erfindung ergeben sich nicht nur aus den Ansprüchen, den diesen zu entnehmenden Merkmalen für sich und/oder in Kombination - sondern auch aus der nachfolgenden Beschreibung eines der Zeichnung zu entnehmenden bevorzugten Ausführungsbeispiels.

In der einzigen Figur ist rein prinzipiell eine Anordnung zur Messung eines insbesondere rotationssymmetrischen oder großflächigen Objektes 10 mittels eines Koordinatenmessgerätes dargestellt. Um das Objekt 10 mittels einer Bildverarbeitungssensorik 12 wie Kamera zu messen, wird das Objekt mittels eines diffus strahlenden Beleuchtungskörpers 14 ausgestrahlt. Hierbei kann es sich um eine Glasplatte handeln, in die über eine Seitenfläche bzw. -kante Licht eingekoppelt wird. Um das Objekt 10 mit möglichst parallelem Licht auszuleuchten, ist zur optischen Achse 30 der Bildverarbeitungssensorik 12 zwischen dem Objekt 10 und dem Beleuchtungskörper 14 ein Filter 16 angeordnet, der Beleuchtungsstrahlen 18, 20, 22, 24, 26, 28 kleiner als ein mechanisch definierter Grenzwinkel $\alpha$ durchlässt, der zur Beleuchtung des Objektes 10 nutzbar ist. Hierdurch ist insbesondere beim Messen rotationssymmetrischer Teile wie Wellen, Drehteile, Gewinde, Werkzeuge eine schärfere Abbildung erzielbar, wobei jeweilige Längsachse der rotationssymmetrischen Teile oder Körper quer zur optischen Achse verlaufen sollte.

Der Winkel $\alpha$ wird durch die Ausbildung des Filters 16 mechanisch definiert. Hierzu weist der Filter 16 eine vorzugsweise wabenartige Struktur mit Durchgangsdurchbrechungen bzw. Durchtrittsöffnungen 32, 34 auf, die ein definiertes Verhältnis von Länge H zu Durchmesser B aufweisen derart, dass der Aperturwinkel nach Durchsetzen des Filters 16 reduziert wird. Somit wird das zu messende Objekt 10 nur mit der durch den Winkel $\alpha$ definierten Beleuchtungsapertur beleuchtet. Folglich können Objekt 10 oder Bildverarbeitungssensorik 12 bzw. Kamera hinter dem Filter 16 relativ zueinander bewegt werden, um das Objekt 10 durch die Bildverarbeitungssensorik 12 bzw. die Kamera für messtechnische Zwecke aufnehmen zu können, ohne dass eine Bewegung des Beleuchtungskörpers 14 erforderlich ist. Die Innenfläche der Öffnungen 32, 34 ist dabei derart ausgebildet, dass Reflexionen ausgeschlossen werden, die zu einer Aperturvergrößerung führen können. So kann die Innenfläche mattiert sein.

Die Durchtrittsöffnungen können beliebigen Querschnitt, insbesondere einen rechteckigen wie quadratischen oder kreisförmigen Querschnitt aufweisen.

Vorzugsweise ist der Winkel $\alpha \leq 10°$, insbesondere $\alpha \leq 3°$, gegebenenfalls $\leq 1°$. Das Längen- zu Durchmesser- bzw. Kantenverhältnis H : B sollte mindestens im Bereich zwischen 4 : 1 und 10 : 1 liegen. Vorzugsweise beträgt das Aspektverhältnis $2 \leq$ H : B $\leq 50$, insbesondere H : B $\geq 10$.

Beispielhaft können die Durchtrittsöffnungen 32, 34 eine Länge H von 20 mm und einen Durchmesser bzw. Kantenlänge B mit 1 mm oder eine Länge H von 6,5 mm und einen Durchmesser bzw. einer Kantenlänge B von 1 mm aufweisen, um nur beispielhaft Werte zu nennen, die jedoch eine Einschränkung der erfindungsgemäßen Lehre nicht darstellen.

Mit anderen Worten wird durch die erfindungsgemäße Lehre die Apertur (Öffnungswinkel $\alpha$) der Beleuchtung an die des verwendeten Objektivs, d. h. dessen optische Apertur angepasst. Dabei sollte die Beleuchtungsapertur gleich der Objektivapertur sein oder kleiner. Typische Werte für die Objektivapertur können zwischen 0,02 und 0,8 liegen, ohne dass hierdurch eine Beschränkung der erfindungsgemäßen Lehre erfolgt.

Ganz allgemein wird die Beleuchtungsapertur NA über das Verhältnis zwischen Kantenlänge bzw. Durchmesser B der Durchtrittsöffnung 32, 34 zu dessen Länge L nach der Beziehung eingestellt:

$$NA = \sin\left(\arctan\left(B/H\right)\right).$$

Ein typisches Verhältnis bei den zuvor angegebenen Werten von B = 1 mm und H = 20 mm ergibt eine Beleuchtungsapertur NA von 0,05. Dies entspricht einer Objektivapertur mit einer 0,2-fachen Vergrößerung. Für ein Objektiv mit 10-facher Vergrößerung ergibt sich eine Beleuchtungsapertur NA = 0,5 , so dass unter Berücksichtigung zuvor wiedergegebener Beziehung B = 1 mm und H = 6,5 mm betragen. Diese Werte sind rein beispielhaft genannt.

**Patentansprüche**

1. Koordinatenmessgerät mit einer Durchlichtbeleuchtungsanordnung zum Messen eines Objektes (10), umfassend zumindest einen Beleuchtungskörper (14) sowie eine entlang einer optischen Achse (30) messende ein Objektiv umfassende Bildverarbeitungssensorik (12),
   **dadurch gekennzeichnet,**
   **dass** der zumindest eine Beleuchtungskörper (14) diffus strahlend ausgebildet ist und dass zwischen dem Beleuchtungskörper (14) und dem Objekt (10) ein Filter (16) mit kanalartigen Durchtrittsöffnungen (32, 34) angeordnet ist, die parallel zu der optischen Achse (30) verlaufen und Strahlen kleiner einem definierten Grenzwinkel $\alpha$ zu der optischen Achse (30) durchlassen und Strahlen, die zu der optischen Achse einen Winkel größer als $\alpha$ einschließen, nicht durchlassen.

2. Koordinatenmessgerät nach Anspruch 1,
   **dadurch gekennzeichnet,**
   **dass** die kanalartigen Durchtrittsöffnungen (32, 34) eine Beleuchtungsapertur NA aufweisen, die gleich oder kleiner als die optische Apertur des Objektivs ist.

3. Koordinatenmessgerät nach Anspruch 2,
   **dadurch gekennzeichnet,**
   **dass** der Grenzwinkel $\alpha$ sich beläuft auf $\alpha \leq 10°$, insbesondere $\alpha \leq 3°$, gegebenenfalls $\alpha \leq 1°$.

4. Koordinatenmessgerät nach Anspruch 2,
   **dadurch gekennzeichnet,**
   **dass** die Beleuchtungsapertur NA beträgt $0,03 \leq$ NA

≤ 0,18, insbesondere 0,05 ≤ NA ≤0,15.

5. Koordinatenmessgerät nach zumindest einem der vorhergehenden Ansprüche,
**dadurch gekennzeichnet,**
**dass** der Filter ein die Durchtrittsöffnungen (32, 34) aufweisender Wabenkörper, insbesondere aus Keramik, ist.

6. Koordinatenmessgerät nach zumindest einem der vorhergehenden Ansprüche,
**dadurch gekennzeichnet,**
**dass** die Durchtrittsöffnungen (32, 34) eine Zylinderform mit kreisförmigen oder rechteckförmigen, wie quadratischem, Querschnitt aufweisen mit einem Verhältnis von Länge H zu Durchmesser bzw. Kantenlänge B von vorzugsweise 2 ≤ H : B ≤ 50, insbesondere H : B ≥ 10.

7. Koordinatenmessgerät nach zumindest einem der vorhergehenden Ansprüche,
**dadurch gekennzeichnet,**
**dass** der Beleuchtungskörper (14) ein Flächenstrahler wie eine Glasplatte ist, in den bzw. die seitlich Licht einkoppelbar ist.

8. Koordinatenmessgerät nach zumindest einem der vorhergehenden Ansprüche,
**dadurch gekennzeichnet,**
**dass** die Durchtrittsöffnungen (32, 34) des wabenartigen Körpers einen Querschnitt eines Kreises oder eines Vielecks, insbesondere eines Rechtecks wie Quadrats aufweisen.

9. Koordinatenmessgerät nach zumindest einem der vorhergehenden Ansprüche,
**dadurch gekennzeichnet,**
**dass** die Durchtrittsöffnungen (32, 34) ein Aspektverhältnis von mindestens 4 : 1, vorzugsweise von mindestens 10:1 aufweisen.

10. Koordinatenmessgerät nach zumindest einem der vorhergehenden Ansprüche,
**dadurch gekennzeichnet,**
**dass** die Durchtrittsöffnungen (32, 34) innenseitig antireflektierend ausgebildet sind.

**Claims**

1. Coordinate measuring device with a transmitted light arrangement for measuring an object (10), comprising at least one illumination element (14) as well as an image processing sensor unit (12) comprising a lens and measuring along an optical axis (30),
**characterized in**
**that** the at least one illumination element (14) is designed so as to be radiating diffusely and that a filter (16) with channel-like openings (32, 34) is arranged between the illumination element (14) and the object (10), the openings extending parallel to the optical axis (30) and allowing rays smaller than a defined critical angle α in relation to the optical axis (30) to pass through and not allowing rays greater than an angle α in relation to the optical axis to pass through.

2. Coordinate measuring device according to claim 1,
**characterized in**
**that** the channel-like openings (32, 34) have an illumination aperture NA, which is equal to or smaller than the optical aperture of the lens.

3. Coordinate measuring device according to claim 2,
**characterized in**
**that** the critical angle α is α ≤ 10°, especially α ≤ 3°, if need be α ≤ 1°.

4. Coordinate measuring device according to a claim 2,
**characterized in**
**that** the illumination aperture NA is 0,03 ≤ NA ≤ 0,18, especially 0,05 ≤ NA ≤ 0,15.

5. Coordinate measuring device according to at least one of the preceding claims,
**characterized in**
**that** the filter is a honeycombed element, especially one made of ceramics, comprising the openings (32, 34).

6. Coordinate measuring device according to at least one of the preceding claims,
**characterized in**
**that** the openings (32, 34) have a cylindrical shape with circular or rectangular, such as square, cross-section with a ratio of length (H) to diameter or edge length (B) of preferably 2 ≤ H : B ≤ 50, in particular H : B ≥ 10.

7. Coordinate measuring device according to at least one of the preceding claims,
**characterized in**
**that** the illumination element (14) is a large area radiator such as a glass plate into which light can be injected laterally.

8. Coordinate measuring device according to at least one of the preceding claims,
**characterized in**
**that** the openings (32, 34) of the honeycombed element have a cross-section of a circle or of a polygon, especially of a rectangle such as a square.

9. Coordinate measuring device according to at least one of the preceding claims,
**characterized in**
**that** the openings (32, 34) have an aspect ratio of at least 4:1, preferably of at least 10:1.

10. Coordinate measuring device according to at least one of the preceding claims, **characterized in that** the openings (32, 34) are designed so as to be inside anti-reflecting.

**Revendications**

1. Appareil de mesure de coordonnées avec un dispositif d'éclairage par transmission pour mesurer un objet (10), comprenant au moins un corps d'éclairage (14) ainsi qu'une technique sensorielle de traitement d'images (12) effectuant des mesures le long d'un axe optique (30) et comprenant un objectif, **caractérisé en ce que** le corps d'éclairage (14) au moins en présence est conçu de façon à rayonner de manière diffuse, et qu'est disposé entre le corps d'éclairage (14) et l'objet (10) un filtre (16) avec des ouvertures traversantes de type canal (32, 34) qui s'étendent parallèlement à l'axe optique (30), qui laissent passer les rayons formant par rapport à l'axe optique (30) un angle inférieur à un angle limite défini $\alpha$ et qui ne laissent pas passer les rayons formant par rapport à l'axe optique un angle supérieur à $\alpha$.

2. Appareil de mesure de coordonnées selon la revendication 1, **caractérisé en ce que** les ouvertures traversantes de type canal (32, 34) présentent une ouverture d'illumination NA qui est identique ou inférieure à l'ouverture optique de l'objectif.

3. Appareil de mesure de coordonnées selon la revendication 2, **caractérisé en ce que** l'angle limite $\alpha$ s'élève à $\alpha \leq 10°$, en particulier à $\alpha \leq 3°$, le cas échéant à $\alpha \leq 1°$.

4. Appareil de mesure de coordonnées selon la revendication 2, **caractérisé en ce que** l'ouverture d'illumination NA s'élève à $0,03 \leq NA \leq 0,18$, en particulier $0,05 \leq NA \leq 0,15$.

5. Appareil de mesure de coordonnées selon au moins l'une des revendications précédentes, **caractérisé en ce que** le filtre est un corps en nid d'abeilles, en particulier en céramique, présentant les ouvertures traversantes (32, 34).

6. Appareil de mesure de coordonnées selon au moins l'une des revendications précédentes, **caractérisé en ce que** les ouvertures traversantes (32, 34) présentent une forme cylindrique avec une coupe transversale circulaire ou rectangulaire, par exemple carrée, d'un rapport longueur H - diamètre ou longueur de côté B s'élevant de préférence à $2 \leq H : B \leq 50$, en particulier à $H : B \geq 10$.

7. Appareil de mesure de coordonnées selon au moins l'une des revendications précédentes, **caractérisé en ce que** le corps d'éclairage (14) est un projecteur plan tel qu'une plaque de verre dans lequel ou laquelle de la lumière peut être couplée latéralement.

8. Appareil de mesure de coordonnées selon au moins l'une des revendications précédentes, **caractérisé en ce que** les ouvertures traversantes (32, 34) du corps en nid d'abeilles présentent une coupe transversale d'un cercle ou d'un polygone, en particulier d'un rectangle, tel qu'un carré.

9. Appareil de mesure de coordonnées selon au moins l'une des revendications précédentes, **caractérisé en ce que** les ouvertures traversantes (32, 34) présentent un rapport d'aspect d'au moins 4 : 1, de préférence d'au moins 10 : 1.

10. Appareil de mesure de coordonnées selon au moins l'une des revendications précédentes, **caractérisé en ce que** la face interne des ouvertures traversantes (32, 34) est conçue de manière antiréfléchissante.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2701764 A
- DE 19805040 A
- DE 10031719 A
- DE 20205631 U